# EUROPEAN PATENT APPLICATION

(11) **EP 3 308 899 A1**
(43) Date of publication of application: **18.04.2018**
(21) Application number: 16198957.9
(22) Date of filing: 15.11.2016
(51) Int. Cl.: B23K 35/30, B23K 1/00, B23K 1/008, B23K 1/18, B23K 33/00, F02M 55/00, F02M 55/02, F02M 61/14, B23K 101/04

(54) **BRAZED ARTICLE, FUEL RAIL ASSEMBLY AND METHOD FOR PRODUCING A BRAZED ARTICLE**

(30) Priority: 14.10.2016 EP 16194044
(71) Applicant: Continental Automotive GmbH, 30165 Hannover (DE)
(72) Inventor: Di Domizio, Gisella, 56017 San Giuliano Terme (IT); Pasquali, Marco, 57128 Livorno (IT); Serra, Giandomenico, 56010 Ghezzano - S.Giuliano Terme (PI) (IT)

(57) **Abstract**

A brazed article (1) is disclosed. It comprises a first workpiece (3), a second workpiece (5) and a brazed joint (7) which fixedly connects the workpieces (3, 5) by means of a brazing filler material (11) distributed between a first joining area (31) represented by a surface portion of the first workpiece (3) and a second joining area (51) represented by a surface portion of the second workpiece (5). The first joining area (31) and/or the second joining area (51) is/are provided with at least one slot (13). Further a method for producing the brazed article (1) and a fuel rail assembly are disclosed.

## Description

### TECHNICAL FIELD

The present disclosure relates to a brazed article and to method for producing the same. It further relates to a fuel rail assembly.

### TECHNICAL BACKGROUND

Producing brazed joints to connect workpieces usually comprises applying a brazing filler material to the workpieces and exposing the workpieces with the brazing filler material to heat in a furnace for melting the brazing filler material.

When the brazing filler material is applied to portions of the workpieces where it does not come in proper contact with the atmosphere in the furnace, there is a risk that the brazing is only partial or that there is no brazing at all.

This maybe caused, for example, due to insufficient heat transfer to the brazing filler material and/or due to oxidation of the joint surfaces and/or the filler material surface which is not sufficiently reduced by the furnace atmosphere.

### BRIEF SUMMARY

It is an object of the present disclosure to provide a brazed article with a particularly reliable brazed joint and a particularly reliable method for producing a brazed article.

These objects are achieved by a brazed article and a method having the features of the independent claims. Further advantages, advantageous embodiments and developments of the article and the method are specified in the dependent claims, the following description and the drawings.

According to one aspect, a method for producing a brazed article is disclosed. According to a further aspect, a brazed article is disclosed. The brazed article comprises a first workpiece, a second workpiece and a brazed joint which fixedly connects the workpieces by means of a brazing filler material.

The method comprises a step in which the brazing filler material is applied to the first workpiece and/or the second workpiece. In a further, in particular subsequent step, the first and second joining areas are approached and in particular brought in direct contact with one another. In a further, expediently, subsequent method step, the first and second workpieces and the brazing filler material are exposed to heat and a furnace atmosphere in a furnace to melt the brazing filler material. The molten brazing filler material flows between the first and second joining areas so that it is distributed between the first and second joining areas, in particular to produce the brazed joint.

Thus, in the completed brazed article, the brazing filler material is distributed between the first joining area and the second joining area, in particular to adhere the first joining area to the second joining area for fixing the first and second workpieces to one another. The first joining area is represented by a surface portion of the first workpiece. The second joining area is represented by a surface portion of the second workpiece.

In particular after the first and second joining areas have been approached to one another during the method for producing the brazed article, the first joining area may be in direct contact with the second joining area, at least in places. That the first and second joining areas are in "direct contact" means in particular that the first and second joining areas are in form-fit and/or force fit engagement. Expediently, a residual gap remains - for example due to manufacturing tolerances and/or surface roughness into which molten brazing filler material enters by capillary action during production of the brazed joint. In this way, it may be distributed between the first joining area and the second joining area also in places where the first and second joining areas are in direct contact. In one embodiment, the first and second joining areas are in direct contact in some regions and spaced apart from one another in other regions. For example, a gap is formed between the first and second contact areas, the gap tapering towards a contact area in which the joining areas are in direct contact. In one development said gap is partially or completely filled with the brazing filler material.

According to the present disclosure, the first joining area is provided with at least one slot. Alternatively or additionally, the second joining area is provided with at least one slot.

By means of the slot, satisfactory exposure of the brazing filler material to the furnace atmosphere is achievable. In this way, the risk that the brazing filler material does not melt properly or that distribution of the filler material between the joining areas is unsatisfactory is particularly small. At the same time, filling of the slot with the brazing filler material expediently enables production of a fluid tight brazed joint. By means of the slot, is may be easy to control the quality of the brazed joint.

When the first and second workpieces and the brazing filler material are exposed to heat and the furnace atmosphere in the furnace during the above mentioned method step, the furnace atmosphere is led towards the brazing filler material through the at least one slot. Expediently, the brazing filler material may flow along the first and/or second workpiece for establishing the brazed joint. In one embodiment, the brazing filler material may flow along the first and/or second workpiece also for filling the at least one slot. In this embodiment, the at least one slot of the finished brazed article is filled - partially or completely - with the brazing filler material. In this way, the quality of the brazed joint may be particularly easily inspectable and/or a particularly tight joint is producible.

In one embodiment, the first workpiece has a hollow shape with an interior space formed by a circumferential wall. The slot preferably extends from the interior space to a periphery of the first workpiece. For example, the first joining area comprises a front surface of the circumferential wall and the slot is an indentation of the front surface which penetrates the wall from a peripheral surface to an internal surface thereof. With advantage, this enables production of a reliable brazed joint when the first joining area - or a portion thereof - is arranged in the interior space of the first workpiece; for example when a portion of the first joining area is comprised by the internal surface of the circumferential wall.

In one development, also the second workpiece has a hollow shape having an interior space. The hollow first and second workpieces are preferably joined such that the interior spaces of the first and second workpieces are hydraulically coupled. The brazed joint is preferably a fluid tight joint which seals an interface of the interior space of the first workpiece with the interior space of the second workpiece. For example, the first and second joining areas extend and the brazing filler material extend completely circumferentially around the interior spaces in the region of their interface. The method and the brazed article according to the present disclosure enable to achieve a particularly reliable fluid-tightness.

In one embodiment, the second workpiece comprises a nipple. For example, the second workpiece has a dome-shaped or cup-shaped base body, the nipple projecting from the base body, in particular from a closed end thereof. The nipple may be hollow for hydraulically connecting the base body to the interior space of the first workpiece. Preferably, the nipple is inserted into the interior space of the first workpiece, in particular such that it is press-fitted with an end region of the circumferential wall. For example in this case, the second joining area may comprise a peripheral surface of the nipple and the first joining area may in particular comprise an end portion of the internal surface of the circumferential wall of the first workpiece.

As an alternative to a press-fit connection, the nipple and the end region of the circumferential wall of the first workpiece may be in loose-fit connection, such that in particular a radial gap is established between the peripheral surface of the nipple and the internal surface of the circumferential wall. In this case, the workpieces may be fixed to one another by a crimped connection or a welded connection, in particular a spot-weld. By such pre-assembly before the brazed joint is established, safe handling of the workpieces during production of the brazed article is possible. The radial gap due to the loose-fit connection may enable particularly good exposure of the brazing filler material to the furnace atmosphere.

In an expedient embodiment, the second work piece may comprise a step projecting laterally from an end of the nipple, the step being comprised by the second joining area. The step is in particular represented by the closed end of the base body.

In one embodiment, the slot comprises a first groove in the step of the second workpiece, the first groove extending laterally outward from the nipple. In one embodiment, the first groove extends radially outward from the nipple. In another embodiment, the first groove extends tangentially away from the peripheral surface of the nipple in one direction or in two opposite directions. A slot with such a first groove is particularly easily and cost-efficiently producible.

In one development, the slot further comprises a second groove which extends along the nipple towards the step of the second workpiece and merges with the first groove. The second groove is preferably provided in the peripheral surface of the nipple. From its interface with the first groove where it merges with the first groove, it extends in particular away from the base body of the second workpiece. For example, it extends to a free end of the nipple.

In another embodiment, the slot comprises a first groove which extends in the front surface of the circumferential wall of the first workpiece from the peripheral surface to the internal surface of the wall and a second groove which extends in the internal surface of the wall away from the front surface.

By means of such second grooves, the furnace atmosphere can be led along the joining areas particularly well. In order to produce a fluid tight brazed joint, the second groove(s) is/are preferably at least partially filled with the brazing filler material.

In one embodiment, the first workpiece or the second workpiece comprises a reservoir space which is configured for accommodating the brazing filler material at least before the brazed joint is produced. For example, the reservoir space is comprised by the interior space of the first workpiece and formed by a step of the circumferential wall. The step of the circumferential wall may expediently be positioned subsequent to and spaced apart from the nipple of the second workpiece on the side of the nipple remote from the step of the second workpiece.

In particular when such a reservoir space is present, one embodiment of the method comprises applying the brazing filler material to a region of the first and/or second workpiece which is arranged subsequent to and preferably spaced apart from the first and second joining areas. When the filler material is melted during exposure to heat in the furnace, it flows along the first and/or second workpiece to the first and second joining areas for filling the at least one slot and in particular for being distributed between the joining areas.

In one embodiment of the method, applying the brazing filler material comprises providing the brazing filler material in the shape of a ring and inserting the ring into the interior space of the first workpiece, in particular into the reservoir space. The ring may be a washer in one embodiment. Other shapes are also conceivable for the brazing filler material element which is inserted into the interior space.

By inserting the brazing filler material into the interior space of one of the workpieces, in particular into the reservoir space, the filler material is particularly well protected during handling the article before the brazed joint is produced. Particularly reliable brazed joints are, thus, achievable. In addition, the article can be particularly easily and precisely pre-assembled of the brazing step of the method in this way.

Further, when the brazing filler material is provided in the interior space at a position subsequent to the joining regions, quality of the brazed joint can easily be inspected from outside. The brazing filler material is only visible on the outside of the workpieces, in particular in the slot, once it has flown completely along the joining areas.

According to a further aspect, a fuel rail assembly is disclosed. The fuel rail assembly comprises a main gallery which is in particular an elongated, tubular fuel reservoir which may be fed by a high pressure pump. Further, the fuel rail assembly comprises a plurality of fuel delivery lines, each fuel delivery line comprising an injector cup. The injector cups are configured for receiving a respective fuel injector for hydraulically coupling the fuel injector to the main gallery. The injector cups can be fixed directly to the main gallery. Alternatively, each of the fuel delivery lines comprises a drop pipe arranged between and hydraulically coupling the injector cup and the main gallery. In one embodiment, the brazed article is a component for the fuel rail assembly. In this case, the first workpiece is preferably represented by the main gallery or the drop pipe, respectively. The second workpiece is preferably represented by the injector cup. With the brazed article and the method according to the present disclosure, the fuel rail assembly may be particularly reliable and/or cost-efficiently producible.

### BRIEF DESCRIPTION OF THE DRAWINGS

Advantageous embodiments and developments of the brazed article and the method will become apparent from the exemplary embodiments described below in association with the figures.

In the figures:
- Figure 1: shows a section view of a portion of a brazed article during a stage of a method for its production according to a first exemplary embodiment,
- Figure 2a: shows a perspective view of a portion of a first workpiece of the brazed article according to the first embodiment,
- Figure 2b: shows a perspective view of a portion of a first workpiece of a brazed article according to a second embodiment,
- Figure 3a: shows a perspective view of a portion of a second workpiece of a brazed article according to a third embodiment,
- Figure 3b: shows a perspective view of a portion of a second workpiece of a brazed article according to a fourth embodiment, and
- Figure 4: shows a side view of a fuel rail assembly in a furnace.

In the exemplary embodiments and figures, identical, similar or similarly acting constituent parts are provided with the same reference symbols. In some figures, individual reference symbols may be omitted to improve the clarity of the figures.

### DETAILED DESCRIPTION

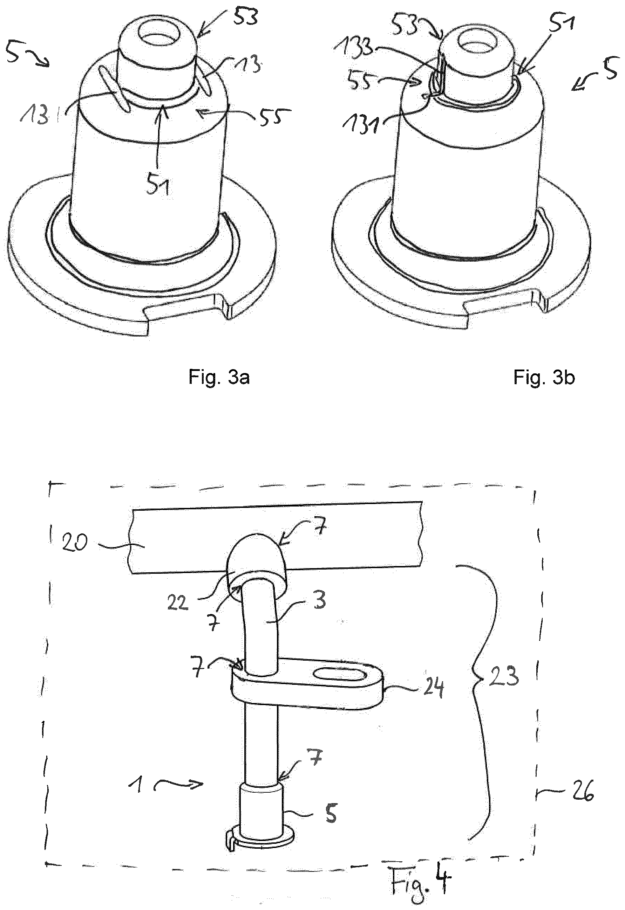

Figure 4 shows a fuel rail assembly in a stage during a step of a method for producing a brazed article 1 of a fuel rail assembly according to an exemplary embodiment of the invention.

The method comprises placing the fuel rail assembly in a furnace 26 and exposing the fuel rail assembly to heat and a furnace atmosphere in the furnace 26 for producing brazed joints to mutually fix and fluid-tightly seal the individual parts of the fuel rail assembly. The furnace 26 is only roughly indicated in Fig. 4 by the dashed lines.

The fuel rail assembly comprises a main gallery 20 from which a plurality of fuel delivery lines branch off at respective outlet ports 22 of the main gallery 20. Only a portion of the main gallery 20 and one of the fuel delivery lines are shown in Fig. 4. Each fuel delivery line has a drop pipe and is inserted into the outlet port 22 with one end. The drop pipe extends away from the outlet port 22 to an injector cup and a portion of which is shifted into the second end of the drop pipe.

Producing the brazed joint 7 between the drop pipe and the injector cup is disclosed in more detail below as an example for a method for producing a brazed article 1 which comprises a first workpiece 3 - the drop pipe in the present embodiment - and a second workpiece 5 - the injector cup in the present embodiment - which are fixedly connected by the brazed joint 7. The method is however also suitable for producing other brazed joints 7 of the fuel rail assembly. The brazed article 1 could, therefore, also be represented by the outlet port 22 and the drop pipe as the first 3 and second workpieces 5, respectively, or by other parts of the fuel rail assembly which are joined by brazed joints 7.

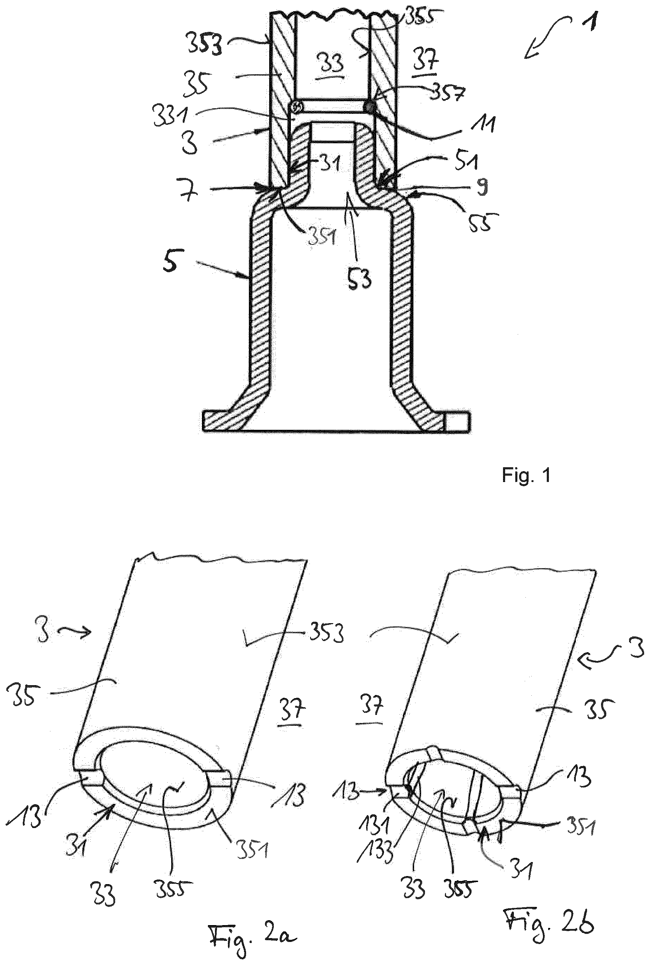

A portion of the brazed article 1 is shown in more detail in the section view of Fig. 1 during a method step of its production which precedes the brazing step in the furnace 26.

The injector cup as the second workpiece 5 has a cup-shaped base body from which a tubular nipple 53 projects at its closed end which is arranged opposite of the opening of the injector cup through which a fuel injector (not shown in the figures) is insertable into the base body for feeding fuel from the main gallery 20 to the fuel injector. The closed end of the base body forms a step 55 of the second workpiece 5 which projects laterally from an end of the nipple 53 which merges with the base body.

The nipple 53 is shifted into an interior space 33 of the drop pipe representing hollow, tubular first workpiece 3 such that a front surface 351 of the wall 35 directly contacts the step 55 of the second workpiece 5. The interior space 33 of the first workpiece 3 is hydraulically connected to an interior space of the cup-shaped base body of the second workpiece 5 by means of the tubular nipple 53. When the nipple 53 is shifted into the drop pipe, a peripheral circumferential surface of the nipple 53 is in loose-fit connection with an internal surface 355 of a circumferential wall 35 of the first workpiece 3 which defines the interior space 33. In order to fix the first and second workpieces 3, 5 for further handling during production of the brazed article 1, a crimped connection or a welded connection - in particular a spot-welded connection may be formed between the first and second workpieces 3, 5. The crimped or welded connection is preferably formed at the interface of the front surface 351 of the wall 35 and the step 55 of the second workpiece 5.

It is also conceivable that a press-fit connection is established between the internal surface 355 of the circumferential wall 35 of the first workpiece 3 and the peripheral surface of the nipple 53. In this case, the crimped or welded connection may advantageously be obsolete.

The step 55 of the second workpiece 5 is inclined relative to the front surface 351 of the wall 35 of the first workpiece 3 so that a gap 9 is established between the front surface 351 of wall 35 and the step 55 of the second workpiece 5. The gap 9 tapers in direction from a peripheral surface 353 of the wall 35 to its internal surface 355 to a contact region of the first and second workpieces 3, 5 in the region of an edge of the first workpiece 3 where the internal surface 355 and the front surface 351 of the wall 35 merge and in the region of an edge of the second workpiece 5 where the nipple 53 which merges with the base body. Alternatively, it is also conceivable that the front surface 351 of the wall 35 is parallel to the step 55 of the second workpiece 5 and essentially in full-area contact with the same.

The circumferential wall 35 of the first workpiece 3 has a step 357 in its internal surface 355 such that the cross-section of the interior space 33 of the first workpiece 3 is larger at an end portion of the first workpiece 3 adjacent to the second workpiece 5 than at a portion of the first workpiece 3 which is following said end portion in direction away from the second workpiece 5.

The front surface 351 and a portion of the internal surface 355 of the wall 35 extending from its interface with the front surface 351 towards the step 357 of the wall 35 together represent a first joining area 31, comprised by the first workpiece 3. The peripheral surface of the nipple 53 and a portion of the surface of the step 55 of the second workpiece 5, which portion in particular delimits the gap 9, together represent a second joining area 51.

A ring of brazing filler material 11, e.g. of copper, is positioned in the interior space 33 of the first workpiece 3 and bears against the step 357 of the wall 35 subsequent to and at a distance from the nipple 53 of the second workpiece 5. The ring of brazing filler material 11 may be slightly oversized with respect to the diameter of the internal surface 355 of the wall 35 so that it is held in place at its position by friction with the wall 35. It is also conceivable that the brazing filler material 11 is provided in another shape, for example in the shape of a washer.

For producing the brazed article 1, the first and second joining areas 31, 51 are approached until the front surface 351 of the wall 35 of the first workpiece 3 is in form-fit connection with the step 55 of the second workpiece 5 and the above-mentioned portion of the inner surface 355 of the wall 355 is in loose-fit connection with the peripheral surface of the nipple 53. The ring of brazing material 11 may expediently be applied to the first workpiece 3 by insertion into the interior space 33 of the first workpiece 3 before the nipple 53 of the second workpiece 5 is press-fitted to the wall 35. Subsequently, a crimping or welding step is performed for producing the crimped or welded connection, respectively between the workpieces 3, 5.

Subsequent to this pre-assembly of the workpieces 3, 5, the fuel rail assembly with the workpieces 3, 5 is placed in the furnace 26, in particular in such fashion that the first and second joining areas 31, 51 follow the ring of brazing filler material in direction of the force of gravity. The workpieces 3, 5 and the brazing filler material 11 are then exposed to heat and a predetermined furnace atmosphere in the furnace 26. Suitable temperatures and furnace atmospheres are in principle known to the person skilled in the art and are, therefore, not described here in greater detail. In one embodiment, the furnace atmosphere may be operable to reduce or prevent surface oxidation of the work-pieces 3, 5 and/or the brazing filler material 11 during exposure of these components to the heat and/or may be operable to promote flow of the molten brazing filler material 11.

Due to the heat, the brazing filler material 11 melts - so that the ring of brazing filler material 11 is in particular dissolved - and flows along the internal surface 355 of the wall 35 of the first workpiece 3 to the joining areas 31, 51 where it is distributed between the first joining area 31 and the second joining area 51. When the exposure to heat is finished, the brazing filler material 11 is in particular arranged between the peripheral surface of the nipple 53 and the above-mentioned portion of the internal surface 355 of the wall 35 and extends into the gap between the front surface 351 of the wall 35 and the step 55 of the second workpiece 5.

In order to promote exposure of the ring of brazing filler material 11 to the furnace atmosphere, a plurality of slots 13 is provided in the first joining area 31 of the first workpiece 3. The slots 13 are not visible in the section view of Fig. 1 but in the perspective view of the first workpiece 3 shown in Fig. 2a. The slots 13 may be operable to lead a satisfactory amount of surface atmosphere towards - and in particular directly to - the ring of brazing filler material 11 during the exposure to heat in the furnace 26.

The slots 13 are shaped as indentations of the front surface 351 of the circumferential wall 35 of the first workpiece 3 which penetrate the wall 35 from the internal surface 355 which delimits the interior space 33 of the first workpiece to the peripheral surface 353 of the wall 35. Thus, the slots 13 extend from the interior space 3 to the periphery 37 - i.e. the surroundings - of the first workpiece 3.

In the present embodiment, the slots 13 have a semi-circular cross-section. Other shapes such as triangular or rectangular cross-sectional shapes are also conceivable. While a configuration with two slots in mirror-symmetrical arrangement is shown in Fig. 2a, the number of slots is not limited thereto in this and other embodiments of the brazed article 1. For example, the brazed article 1 may comprise three, four, five or six slots 13. In some developments, the slots 13 may be distributed in equal distances along the circumference of the first workpiece 3, in particular along the circumference of its circumferential wall 35. It is also conceivable that the slots are arranged asymmetrically.

In the present embodiment, the slots may be operable to lead the furnace atmosphere to the internal surface 355 of the circumferential wall 35 of the first workpiece 3. Due to the loose-fit connection between the internal surface 355 and the external peripheral surface of the nipple 53 of the second workpiece 5, the furnace atmosphere may propagate further to the brazing filler material 11.

In the present embodiment, a fluid-tight brazed joint 7 is produced between the first and second joining areas 31, 51 by means of the brazing material 11 between the first joining area 31 and the second joining area 51. When the brazing filler material 11 flows along the internal surface 355 of the wall 35 and further between the first and second joining areas 31, 51, the slot 13 may also be filled with brazing filler material 11 partially or completely. In the present embodiment, it is also conceivable that the brazing filler material 11 does not flow into the slots 13 during the brazing step, i.e. the slots may be empty and in one development also spaced apart from the brazing filler material 11.

Figures 2b shows a first workpiece 3 of a brazed article 1 according to a second embodiment. The brazed article 1 of the second embodiment corresponds in general to that of the first embodiment, except for the slots 13.

According to the second embodiment, the slots 13 each comprise a first groove 131 embodied as indentations of the front surface 351 of the circumferential wall 35 of the first workpiece 3 which penetrate the wall 35 from the internal surface 355 to the peripheral surface 353 of the wall 35. In addition, the slots 13 according to the present embodiment comprise second grooves 133 which extend away from the front surface 351 along the internal surface 355 of the wall 35 towards the step 357 of the wall 35. The second grooves 133 may lead the furnace atmosphere particularly efficiently to the ring of brazing material 11 along the peripheral surface of the nipple 53.

When the brazing filler material 11 flows along the internal surface 355 of the wall 35 and further between the first and second joining areas 31, 51, the slot 13 is filled with brazing filler material 11 at least to such extent that a fluid-tight brazed joint 7 is produced between the first and second joining areas 31, 51. In particular, the second grooves 133 are partially or completely filled with the brazing filler material 11.

This embodiment is particularly well suited for a press-fit connection between the workpieces 3, 5 during pre-assembly. The second grooves 133 may lead a satisfactory amount of furnace atmosphere to the brazing material 11 in spite of the comparatively tight press-fit between the inner surface 355 of the wall 35 and the peripheral surface of the nipple 53.

Figures 3a and 3b show perspective views of second workpieces 5 of a brazed article 1 according to third and fourth embodiments. The brazed articles 1 of the third and fourth embodiments correspond in general to that of the first embodiment, except for the slots 13.

The first workpieces 3 of the brazed articles 1 according to the third and fourth embodiments may comprise slots 13 as described in connection with the first and second embodiments. Alternatively, the first workpieces 3 of the brazed articles 1 according to the third and fourth embodiments may be free of such slots 13. For example, the front surface 351 of the wall 35 of the first workpiece 3 may be a planar surface which extends along the complete circumference of the wall 35. However, according to the third and fourth embodiments, the second workpiece 5 comprises the slots 13 (or additional slots 13).

According to the third embodiment shown in Fig. 3a, the slots 13 are grooves in an external surface of the second workpiece 5 which extend from an interface of the nipple 53 with the step 55 of the second workpiece 5 in tangential direction away from the nipple 35 along the step 55 in two opposite directions. As an expedient example, the second workpiece 5 according to the third embodiment has two such slots 13 which are arranged mirror-symmetrically and extend parallel to each other along the step 55. During the brazing step, the slots 13 may or may not be filled partially or completely with the brazing material 11.

According to the fourth embodiment shown in Fig. 3b, each of the slots 13 has a first groove 131 which extends from an interface of the nipple 53 with the step 55 of the second workpiece 5 in radial direction away from the nipple 35 along the step 55. Each slot 13 has a second groove 133 which extends along the peripheral surface of the nipple 53 from the free end of the nipple 53 to its interface with the step 55 where the second groove 133 merges with the first groove 131 to form the continuous slot 13. Also in this embodiment, the second grooves 133 may lead the furnace atmosphere particularly efficiently to the ring of brazing material 11 along the peripheral surface of the nipple 53. In the same way as in the second embodiment, the slots 13 are filled with brazing filler material 11 at least to such extent that a fluid-tight brazed joint 7 is produced between the first and second joining areas 31, 51 when the brazing filler material 11 flows along the internal surface 355 of the wall 35 and further between the first and second joining areas 31, 51.

While the second workpiece 5 according to the fourth embodiment comprises two such slots 13, of which only one is visible in Fig. 3b, the second workpiece may comprise a different number of slots 13 in this or other embodiments, for example three, four, five or six slots 13. In some developments, the slots 13 may be distributed in equal distances along the circumference of the first workpiece 3, in particular along the circumference of the nipple 53. It is also conceivable that the slots are arranged asymmetrically.

The invention is not limited to specific embodiments by the description on the basis of said exemplary embodiments but comprises any combination of elements of different embodiments. Moreover, the invention comprises any combination of claims and any combination of features disclosed by the claims.

## Claims

1. Brazed article (1) comprising a first workpiece (3), a second workpiece (5) and a brazed joint (7) which fixedly connects the workpieces (3, 5) by means of a brazing filler material (11) distributed between a first joining area (31) represented by a surface portion of the first workpiece (3) and a second joining area (51) represented by a surface portion of the second workpiece (5),
wherein
the first joining area (31) and/or the second joining area (51) is/are provided with at least one slot (13)

2. Brazed article (1) according to the preceding claim, wherein the slot (13) is partially or completely filled with the brazing filler material (11).

3. Brazed article (1) according to one of the preceding claims, wherein the first joining area (31) is in direct contact with the second joining area (51).

4. Brazed article (1) according to one of the preceding claims, wherein the first workpiece (3) has a hollow shape with an interior space (33) formed by a circumferential wall (35), the slot (13) extending from the interior space (33) to a periphery (37) of the first workpiece (3).

5. Brazed article (1) according to the preceding claim, wherein the first joining area (31) comprises a front surface (351) of the circumferential wall and the slot (13) is an indentation of the front surface (351) which penetrates the wall from a peripheral surface (353) to an internal surface (355) thereof.

6. Brazed article (1) according to one of the preceding claims 4 and 5, wherein the second workpiece (5) comprises a nipple (53) which is inserted into the interior space (33) and a step (55) projecting laterally from an end of the nipple (53), the step (55) being comprised by the second joining area (51).

7. Brazed article (1) according to the preceding claim, wherein the slot (13) comprises a first groove (131) in the step (55) of the second workpiece (5), the first groove (131) extending laterally outward from the nipple (53).

8. Brazed article (1) according to the preceding claim, wherein the slot (13) further comprises a second groove (133) which extends along the nipple (53) towards the step (55) of the second workpiece (5) and merges with the first groove (131), the second groove (133) being partially or completely filled with the brazing filler material (11).

9. Brazed article (1) according to one of the preceding claims, wherein the first workpiece (3) or the second workpiece (5) comprises a reservoir space (331) which is configured for accommodating the brazing filler material (11) at least before the brazed joint (7) is produced.

10. Brazed article (1) according to claim 9 in dependence on one of claims 6 to 8, wherein the reservoir space (331) is comprised by the interior space (33) of the first workpiece (3) and formed by a step (357) of the circumferential wall (35), the step (357) of the circumferential wall (35) being positioned subsequent to and spaced apart from the nipple (53) of the second workpiece (5) on the side of the nipple (53) remote from the step (55) of the second workpiece (5).

11. Brazed article (1) according to one of the preceding claims for a fuel rail assembly, the fuel rail assembly comprising a main gallery (20) and a plurality of fuel delivery lines (23), each fuel delivery line (23) comprising an injector cup configured for receiving a fuel injector for hydraulically coupling the fuel injector to the main gallery (20) and optionally comprising a drop pipe arranged between and hydraulically coupling the injector cup and the main gallery (20), wherein the first workpiece (3) is represented by the main gallery (20) or the drop pipe, respectively, and the second workpiece (5) is represented by the injector cup.

12. Fuel rail assembly comprising a main gallery (20) and a plurality of fuel delivery lines (23), each fuel delivery line (23) comprising a brazed article (1) according to the preceding claim.

13. Method for producing a brazed article (1) according to one of the preceding claims 1 to 11, the method comprising
- applying the brazing filler material (11) to the first workpiece (3) and/or the second workpiece (5),
- approaching the first (31) and second joining areas (51),
- exposing, in a furnace (26), the first (3) and second workpieces (5) and the brazing filler material (11) to heat and a furnace atmosphere to melt the brazing filler material (11) and distribute the brazing filler material (11) between the first (31) and second joining areas (51),
wherein the furnace atmosphere is led towards the brazing filler material (11) through the at least one slot (13).

14. Method according to the preceding claim, wherein the brazing filler material (11) is applied to a region of the first (3) and/or second workpiece (5) which is arranged subsequent to the first (31) and second joining areas (51), is melted by the heat and flows along the first (3) and/or second workpiece (5) to the first (31) and second joining areas (51), in particular for filling the at least one slot (13).

15. Method according to one of the preceding claims 13 to 14, wherein the first workpiece (3) has a hollow shape with an interior space (33) formed by a circumferential wall (35), the slot (13) extending from the interior space (33) to a periphery (37) of the first workpiece (3), and applying the brazing filler material (11) comprises providing the brazing filler material (11) in the shape of a ring and inserting the ring into the interior space (33).
